**Europäisches Patentamt**

**European Patent Office**

**Office européen des brevets**

(19)

(11) Publication number : **0 466 443 A1**

# (12) EUROPEAN PATENT APPLICATION

(21) Application number : **91306194.1**

(22) Date of filing : **08.07.91**

(51) Int. Cl.⁵ : **B60N 2/22**

(30) Priority : **06.07.90 JP 72229/90**
**24.07.90 JP 78407/90**

(43) Date of publication of application :
**15.01.92 Bulletin 92/03**

(84) Designated Contracting States :
**DE FR GB**

(71) Applicant : **HONDA GIKEN KOGYO**
**KABUSHIKI KAISHA**
**1-1, Minami-Aoyama 2-chome**
**Minato-ku Tokyo 107 (JP)**

(72) Inventor : **Kawade, Tateo**
**c/o Honda R & D Co., Ltd., 4-1, Chuo 1-chome**
**Wako-shi, Saitama (JP)**
Inventor : **Ohno, Masao**
**c/o Honda R & D Co., Ltd., 4-1, Chuo 1-chome**
**Wako-shi, Saitama (JP)**
Inventor : **Yokoyama, Sadahiro**
**c/o Honda R & D Co., Ltd., 4-1, Chuo 1-chome**
**Wako-shi, Saitama (JP)**

(74) Representative : **Leale, Robin George et al**
**FRANK B. DEHN & CO. Imperial House 15-19**
**Kingsway**
**London WC2B 6UZ (GB)**

(54) **Reclining seat.**

(57) A lightweight reclining seat (100) is of a rugged structure strong enough to withstand the moment which is applied when a user is seated on the seat. The reclining seat (100) includes a seat (22) for supporting a lower part of the body of the user, a seat frame (23) supporting the seat, a seatback (24) for supporting an upper part of the body of the user, a seatback frame supporting the seatback, a pivot for angularly movably joining the seatback frame to the seat frame, and a reclining mechanism (60) for adjusting the angle at which the seatback is tilted with respect to the seat. The reclining mechanism (60) comprises a reclining arm (40a) having one end pivotally coupled to the seat frame (60) and an opposite end pivotally coupled to the seatback frame, and an adjusting mechanism connected to the reclining arm, for positionally varying at least one end of the ends of the reclining arm (40a).

EP 0 466 443 A1

FIG. 1

The present invention relates to a reclining seat for use in motor vehicles.

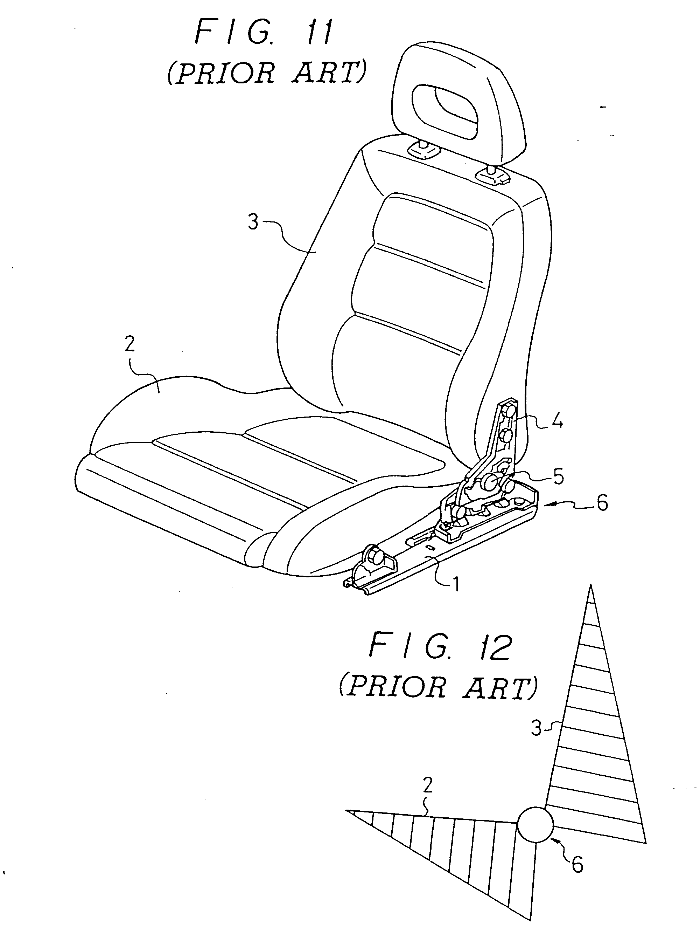

One conventional reclining seat is shown in FIGS. 11 and 12 of the accompanying drawings. As shown in FIG. 11, the reclining seat has a seat 2 mounted on the floor of a motor vehicle by a slide mechanism 1 so that the seat 2 can slide back and forth, and a seatback 3 coupled to the seat 2. The seat 2 and the seatback 3 have respective frames (not shown) that are angularly movably connected to each other by pivot shafts 5 on joint arms 4 attached to the seat 2 and the seatback 3. The pivot shafts 5 are associated with a reclining mechanism 6 for adjusting the angular displacement of the seatback 3 with respect to the seat 2 through a number of angular steps.

The reclining mechanism 6 is mounted on the seat 2 and the seatback 3 by the pivot shafts 5. When a user is seated on the reclining seat, a large moment is imposed on the reclining mechanism 6, the frame of the seat 2, and the frame of the seatback 3, as shown in FIG. 12. Therefore, the reclining seat 6, the frame of the seat 2, and the frame of the seatback 3 have to be of a rugged structure capable of withstanding such a large moment. The conventional reclining seat is disadvantageous in that the reclining seat 6, the frame of the seat 2, and the frame of the seatback 3 are heavy. Specifically, the combined weight of the frames of the seat 2 and the seatback 3 amounts to about half the entire weight of the reclining seat. Accordingly, the overall reclining seat is considerably heavy.

It is an object of the present invention to provide a reclining seat which can sufficiently withstand a moment that is applied when a user is seated on the reclining seat, is retatively lightweight, can easily be adjusted, and is highly durable in use.

According to the present invention, there is provided a reclining seat comprising a seat for supporting a lower part of the body of a user, a seat frame supporting the seat, a seatback for supporting an upper part of the body of the user, a seatback frame supporting the seatback, joint means for angularly movably joining the seatback frame to the seat frame, and reclining means for adjusting the angle at which the seatback is tilted with respect to the seat, the reclining means comprising a reclining arm having one end pivotally coupled to the seat frame and an opposite end pivotally coupled to the seatback frame, and an adjusting mechanism connected to the reclining arm, for positionally varying at least one end of the ends of the reclining arm.

To increase the mechanical strength of the reclining seat, said one end of the reclining arm may be pivotally coupled to the seat frame at a position in the vicinity of the center of gravity of the thighs of the user seated on the seat, and the opposite end of the reclining arm is pivotally coupled to the seatback frame at a position in the vicinity of the center of gravity of the body of the user seated on the seat.

The adjusting mechanism may be disposed in a position where said one end of the reclining arm is pivotally coupled to the seat frame or a position where the opposite end of the reclining arm is pivotally coupled to the seatback frame.

The seat frame, the seatback frame, and the reclining arm jointly serve as a truss for distributing the moment, which is applied when the user is seated on the seat, to the seat frame, the seatback frame, and the reclining arm. With the truss structure, the applied moment may be reduced to at most about 1/5 of the moment which has heretofore been applied to the conventional reclining seat.

Each of the frames may be made of synthetic resin including fiber-reinforced synthetic resin for reduced weight.

The adjusting mechanism may comprise a gear speed reducer which includes an internal gear and an external gear. The gear speed reducer may further include an elastically deformable intermediate transmission member disposed in mesh between the internal and external gears.

For higher torque transmission efficiency, the intermediate transmission member may have internal teeth held in mesh with the external gear and external teeth held in mesh with the internal gear, the internal teeth being held in mesh with all teeth of the external gear. To withstand greater stresses, the intermediate transmission member should preferably include stiffeners embedded between the internal and external teeth.

Some embodiments of the invention wll now be described by way of example and with reference to the accompanying drawings, in which:-

FIG. 1 is a perspective view of a reclining seat according to a first embodiment of the present invention;

FIG. 2 is a perspective view of a frame structure of the reclining seat shown in FIG. 1;

FIG. 3 is an enlarged exploded view of a reclining mechanism of the reclining seat;

FIG. 4 is a diagram showing the distribution of a moment that is applied to the reclining seat when a user is seated thereon;

FIGS. 5a, 5b, and 5c are sectional front elevational views illustrative of the manner in which a gear speed reducer of the reclining mechanism operates;

FIG. 6 is an enlarged exploded view of a gear speed reducer according to a modification;

FIG. 7 is a sectional front elevational view of the gear speed reducer shown in FIG. 6;

FIGS. 8a, 8b, and 8c are sectional front elevational views illustrative of the manner in which the gear speed reducer shown in FIG. 6 operates;

FIG. 9 is a perspective view of a reclining seat according to a second embodiment of the present invention;

FIG. 10 is a perspective view of a reclining seat according to a third embodiment of the present invention;

FIG. 11 is a perspective view of a conventional reclining seat; and

FIG. 12 is a diagram showing the distribution of a moment that is applied to the reclining seat shown in FIG. 11 when a user is seated thereon.

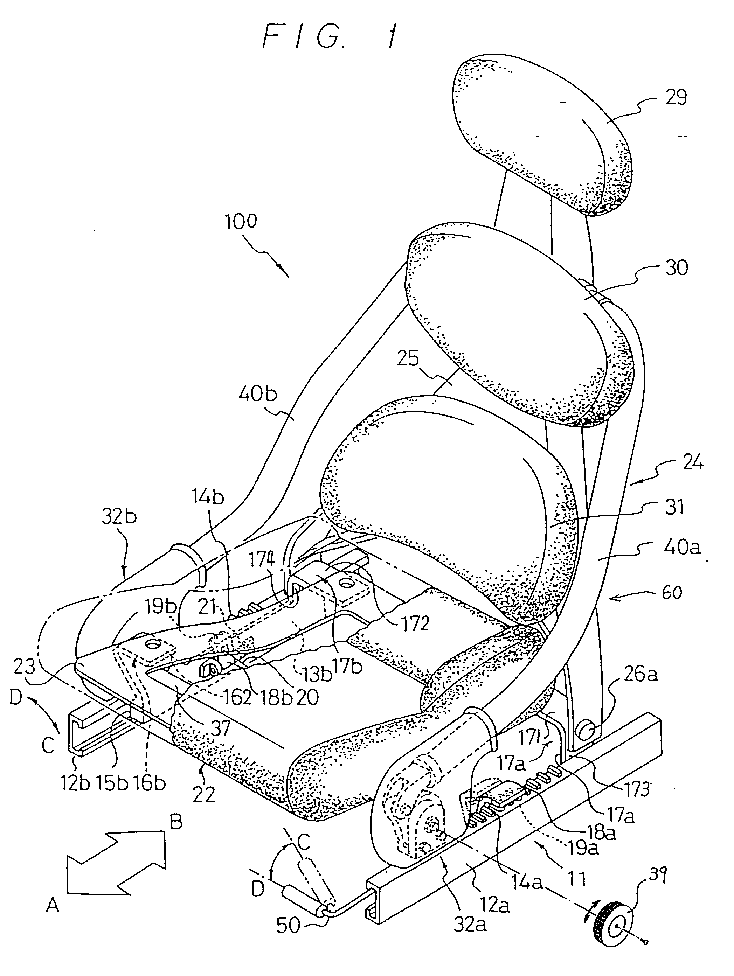

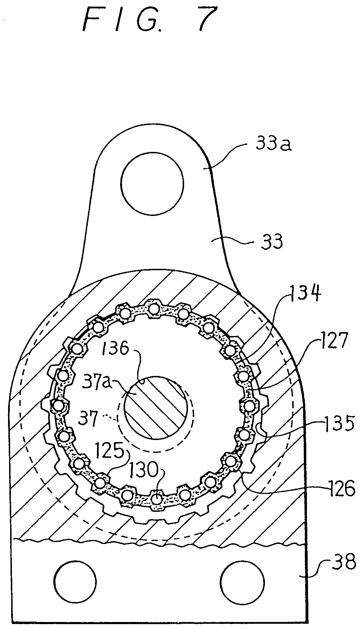

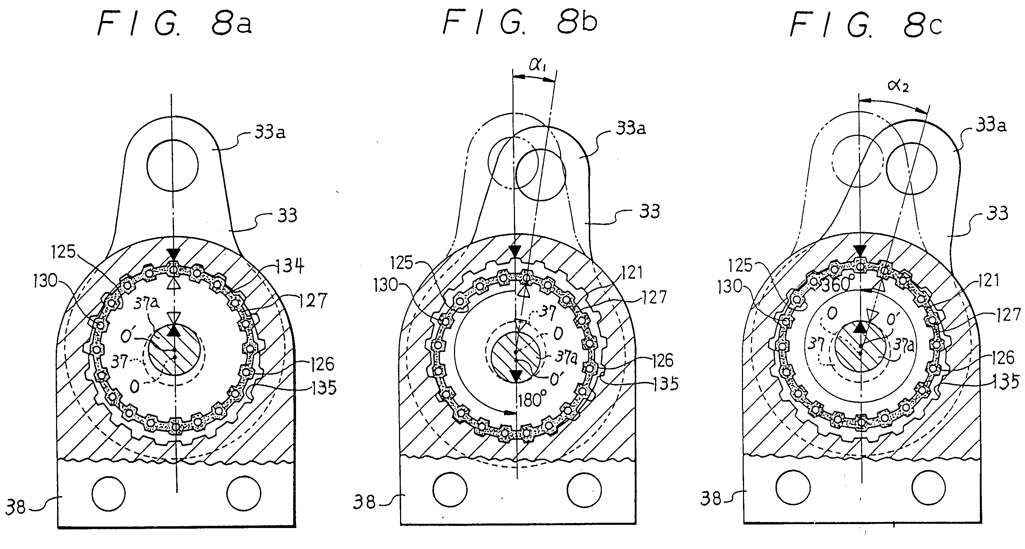

FIGS. 1 through 8 show a reclining seat according to a first embodiment of the present invention.

As shown in FIG. 1, the reclining seat, generally denoted by 100, comprises a seat 22 slidably mounted on the floor of a motor vehicle or the like by a slide mechanism 11 so that the seat 22 is slidably movable back and forth in the directions indicated by the arrows A, B, and a seatback 24 angularly movably coupled to the seat 22. The seat 22 serves to support the lower part of the body of a user, and the seatback 24 the upper part of the body of the user. The seatback 24 has a seatback frame 25 angularly movably attached by a pivot 26 to the rear end of a seat frame 23 of the seat 22. The angular displacement of the seatback 24 with respect to the seat 22 can be adjusted by a reclining mechanism 60.

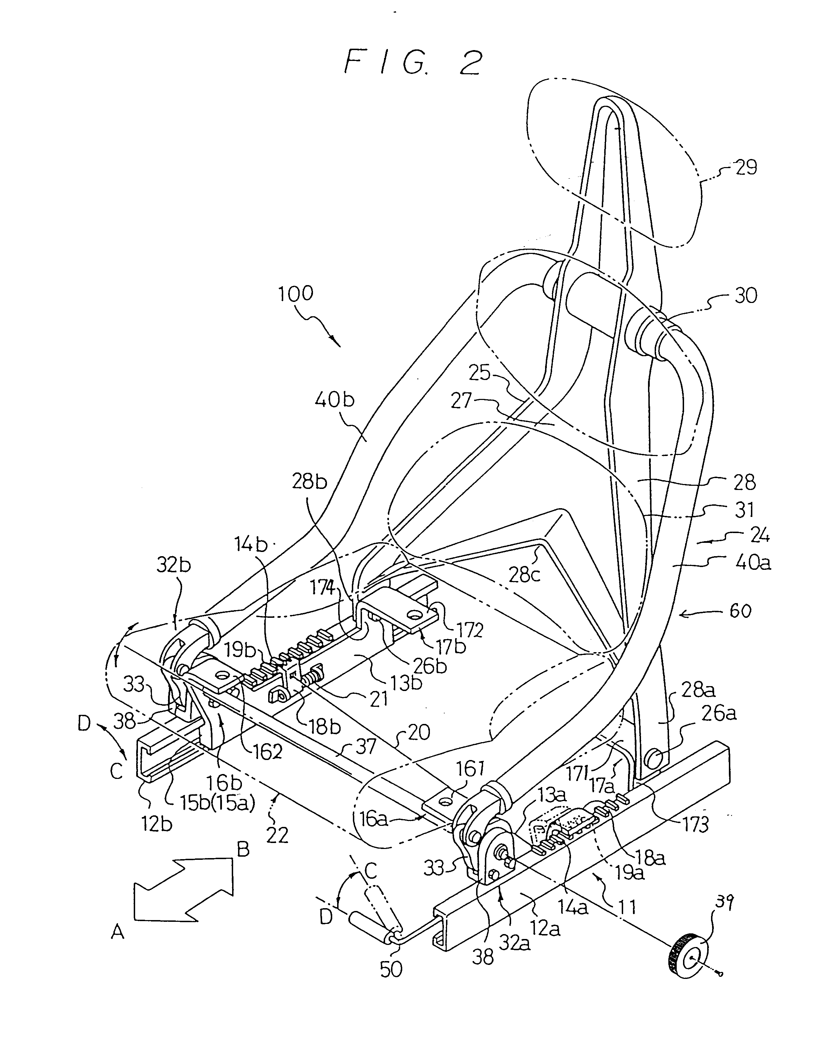

As shown in FIG. 2, the slide mechanism 11 comprises a pair of laterally spaced parallel rails 12a, 12b fixedly mounted on the floor, and a pair of laterally spaced slide members 13a, 13b slidably fitted in the respective rails 12a, 12b. The slide members 13a, 13b have respective longitudinal outer sides 15a, 15b fitted respectively in inner openings or recesses of the rails 12a, 12b for allowing the slide members 13a, 13b to slide along the rails 12a, 12b, respectively.

The rails 12a, 12b have teeth 14a, 14b respectively on their upper surfaces, the teeth 14a, 14b being spaced at equal intervals in the longitudinal direction of the rails 12a, 12b. The slide members 13a, 13b have lock members 18a, 18b angularly movably mounted on inner surfaces thereof at substantially longitudinally central regions. The lock members 18a, 18b have lock fingers 19a, 19b for locking engagement with the teeth 14a, 14b on the rails 12a, 12b.

The lock members 18a, 18b are interconnected by a connecting bar 20. The lock member 18a can be angularly moved by an adjusting handle 50 coupled thereto. The other lock member 18b is normally urged by a return spring 21 in a direction to bring the lock fingers 19b into locking engagement with the teeth 14b on the rail 12b. When the adjusting handle 50 is turned in the direction indicated by the arrow C, the lock fingers 19a, 19b are held in locking engagement with the teeth 14a, 14b on the rails 12a, 12b, thereby locking the slide members 13a, 13b against sliding movement with respect to the rails 12a, 12b.

The slide members 13a, 13b have front brackets 16a, 16b, respectively, and rear brackets 17a, 17b, respectively, which are integrally formed on front and rear ends thereof and extend upwardly. Each of the front and rear brackets 16a, 16b, 17a, 17b is of an inverted L-shaped configuration. The brackets 16a, 16b, 17a, 17b have respective upper surfaces 161, 162, 171, 172 to which the seat frame 23 is fixed at its four corners. The seat frame 23 is thus movable back and forth in unison with the slide members 13a, 13b.

The seatback frame 25 comprises a substantially triangular main panel 27 which is progressively wider from its upper end toward its lower end, and a peripheral side wall 28 extending along the peripheral edges of the main panel 27 and projecting forwardly from the peripheral edges of the main panel. The peripheral side wall 28 includes a lower portion 28c which is of an inverted V shape, and a pair of laterally spaced lower ends 28a, 28b angularly movably coupled by respective pivots 26a, 26b to vertical walls 173, 174, respectively, of the rear brackets 17a, 17b of the slide members 13a, 13b.

The seatback 24 comprises a headrest 29 attached to the front surface of the upper end of the seatback frame 25, a shoulder support 30 attached to the front surface of a substantially vertically central portion of the seatback frame 25, and a lumber support 31 attached to the front surface of the lower end portion of the seatback frame 25.

The reclining mechanism 60 comprises a pair of reclining arms 40a, 40b laterally spaced from each other and positioned on each side of the seat 22 and the seatback 24, and a pair of adjusting mechanisms 32a, 32b combined respectively with the reclining arms 40a, 40b.

The adjusting mechanisms 32a, 32b comprise respective gear speed reducers positioned one on each side of the seat 22 so as to correspond positionally to the thighs of the user seated on the seat in the vicinity of the center of gravity of the thighs.

The reclining arms 40a, 40b have front ends pivotally coupled to the adjusting mechanisms 32a, 32b, respectively, and rear ends pivotally coupled to respective sides of the seatback frame 25 in the vicinity of the center of gravity of the body of the user seated on the seat. Each of the reclining arms 40a, 40b is in the form of an aluminum pipe, and has a substantially intermediate portion curved downwardly so that it does not present an obstacle to the user as he gets seated on or unseated from the seat.

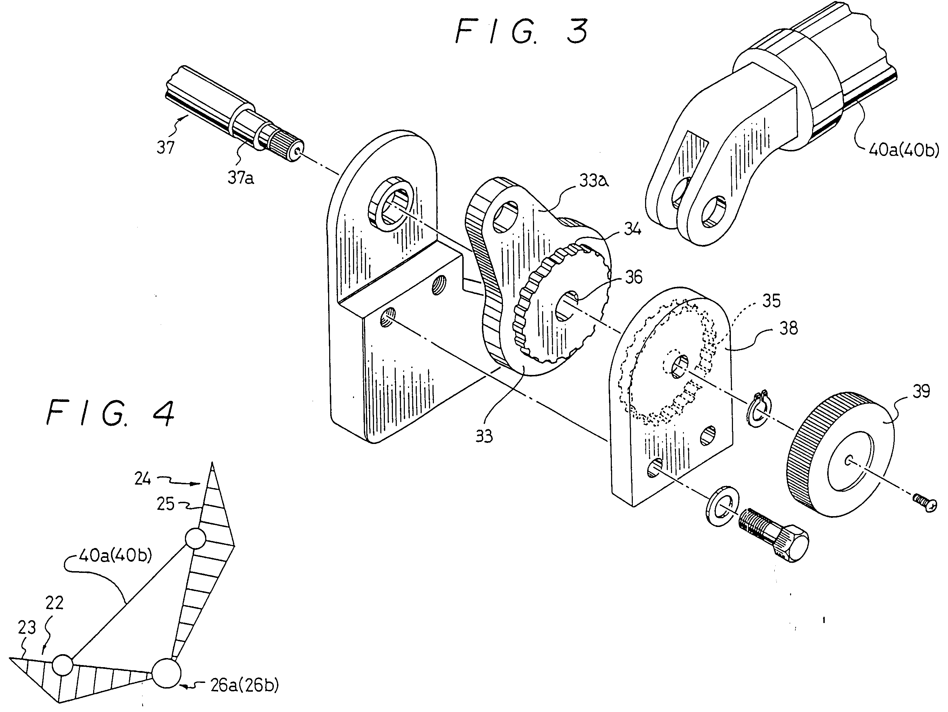

The seat frame 23, the seatback frame 25, and the reclining arms 40a, 40b jointly constitute a truss that distributes a moment, which is applied when the user is seated, to the frames 23, 25 and the reclining arms 401, 40b. The applied moment may be reduced to at most about 1/5 of the moment which has heretofore been applied to the conventional reclining seat, as shown in FIG. 4.

Accordingly, the frames 23, 25 may be made of synthetic resin, including fiber-reinforced synthetic resin, for reduced weight.

As shown in FIG. 3, each of the gear speed reducers comprises an external gear 34, an internal gear 35 held in mesh with the external gear 34, and a connecting shaft 37 for rotating the external gear 34. The internal gear 35 is formed in a bracket 38 fastened to one of the slide members 13a, 13b (FIG. 2). The external gear 34 is formed on a swing member 33 for angular movement therewith, the swing member 33 having a radially outwardly extending arm 33a pivotally coupled to the lower end of one of the reclining arms 40a, 40b. The external gear 34 has a central axis which is positioned out of alignment with the central axis of the internal gear 35, i.e., the external and internat gears 34, 35 are eccentric with respect to each other. The external and internal gears 34, 35 are held in mesh with each other at all times. The external gear 34 has a central hole 36 in which there is rotatably inserted an eccentric cam 37a on an end of the connecting shaft 37.

The swing members 33 of the gear speed reducers are interconnected by the connecting shaft 37. An adjusting knob 39 is mounted on the lefthand end (as viewed from the user seated on the seat) of the connecting shaft 37 which projects through the bracket 38. When the adjusting knob 39 is manually turned by the user seated on the seat, the connecting shaft 37 is turned about its own axis in one direction or the other. The external gears 34 are therefore rotated in mesh with the internal gears 35.

In this embodiment, the teeth of the external gear 34 is fewer than the internal gear 35 by one. The gears of this type are commercially available as Taumel gears from Keiper Co., Germany.

Operation of the gear speed reducers will be described below.

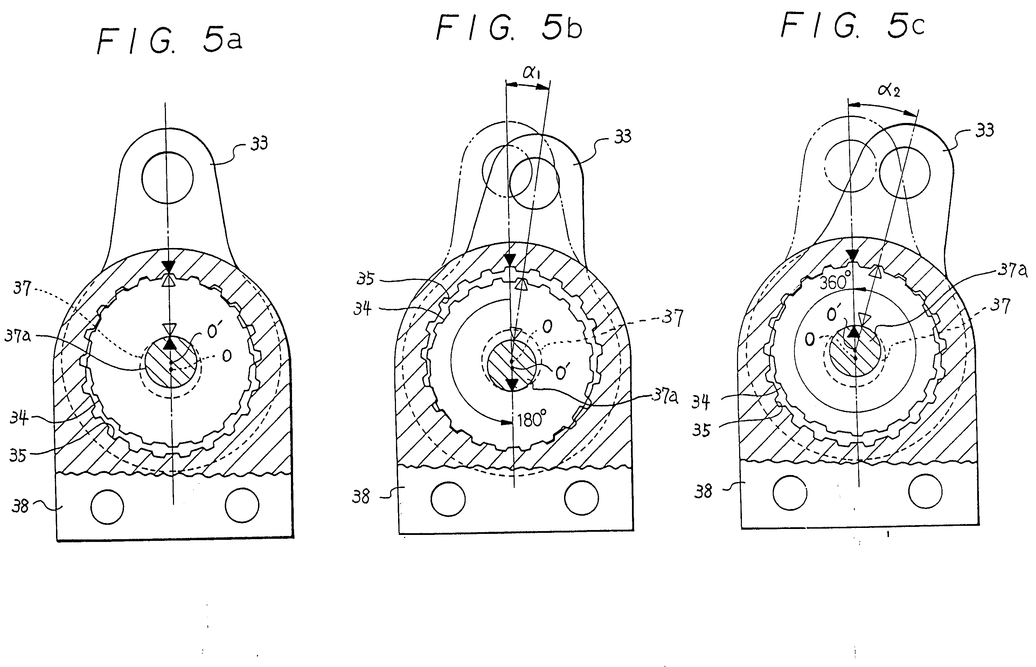

In FIG. 5a, when the connecting shaft 37 is turned counterclockwise about its own axis through an angle $\theta$, the center O′ of the eccentric cam 37a is angularly displaced through the angle $\theta$ with respect to the center O of the connecting shaft 37. The external gear 34 now rotates clockwise about its own axis through an angle $\alpha$ while revolving in mesh with the internal gear 35. At this time, the angle $\alpha$ is given as follows:

$$\alpha = \frac{360°}{\text{number of teech of external gear}} \times \frac{\theta}{360°}$$
$$= \frac{\theta}{\text{Number of teech of external gear.}}$$

When the eccentric cam 37a is turned 180° from the position shown in FIG. 5a to the position shown in FIG 5b, the swing member 33 angularly moves with the external gear 34 through an angle $\alpha_1$ which is given as follows:

$$\alpha_1 = \frac{180°}{\text{Number of teeth of external gear.}}$$

When the eccentric cam 37a is turned 360° from the position shown in FIG. 5a to the position shown in FIG. 5c, the swing member 33 angularly moves with the external gear 34 through an angle $\alpha_2$ which corresponds to the difference between the number of teeth of the internal gear 35 and the number of teeth of the external gear 34.

The speed reduction ratio of the gear speed reducer is expressed by:

$$\frac{\text{Number of teeth of internal gear} - \text{Number of teeth of external gear}}{\text{Number of teeth of internal gear}}$$

When the connecting shaft 37 is rotated in one direction or the other with the adjusting knob 39, the swing members 33 are turned at a reduced speed together with the external gears 34, moving forwardly the front ends of the reclining arms 40a, 40b coupled to the swing members 33. Therefore, the seatback 24 is tilted about the pivots 26a, 26b.

Even when forces are applied from the reclining arms 40a, 40b, the external gears 34 are prevented from rotating, keeping the seatback 24 in the tilted position. Therefore, it is not necessary to provide any lock mechanism to lock the seatback 24 in any desired tilted position. The reclining mechanism 60 is therefore relatively simple in structure. The reclining mechanism 60 is also capable of tilting the seatback 24 continuously, but not in discrete angular steps. The adjusting knob 39 positioned on one side of the thighs of the user seated on the seat allows the user to adjust the angular displacement of the seatback 24 with utmost ease.

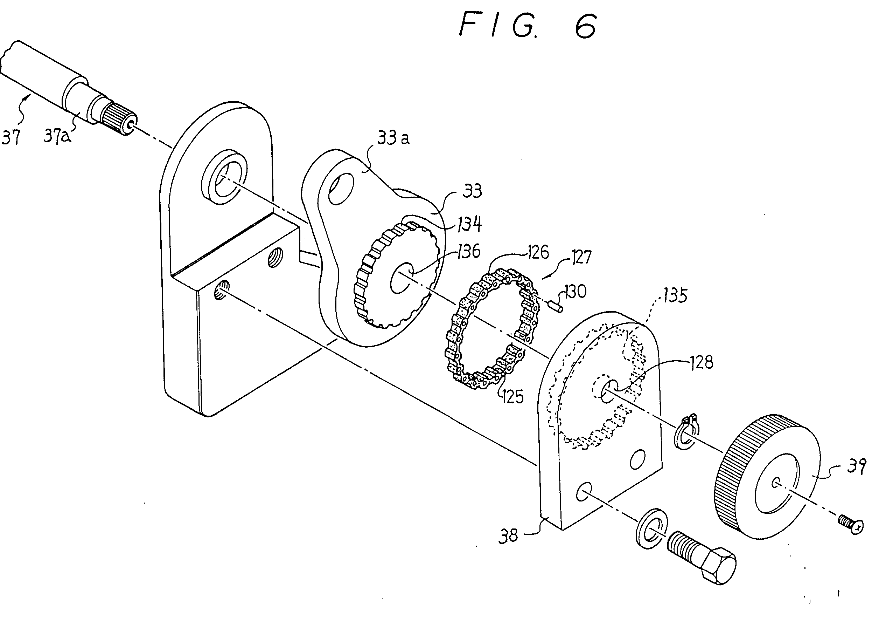

A gear speed reducer according to a modification will be described below with reference to FIGS. 6, 7, and 8a through 8c.

The modified gear speed reducer includes a double-toothed belt (intermediate transmission member) 127 which has internal teeth 125 held in mesh with an external gear 134 and external teeth 126 held in mesh with an internal gear 135. The internal teeth 125 are held in mesh with all the teeth of the external gear 134.

The internal and external gears 135, 134 are made of synthetic resin, fiber-reinforced synthetic resin, nonferrous metal, or the like.

The double-toothed belt 127 is made of an elastometric material such as iron rubber or the like. The double-toothed belt 127 is fitted over the external gear 134. The double-toothed belt 127 includes a plurality of stiffeners 130 of metal such as aluminum which are embedded in positions between the internal and external teeth 125, 126.

Generally, once the reclining angle of the seatback 24 is adjusted, the seatback 24 remains fixed in the angularly adjusted position over a long period of time. Since the applied load is borne by certain teeth of the gears 134, 135 for a continued period of time, the areas of contact of those teeth of the gears 134, 135 should be increased to distribute the imposed load so that the load can reliably be borne.

With the gear speed reducer shown in FIG. 3, the internal and external gears 35, 34 are held in contact with each other through one point, and stresses tend to concentrate on the point of contact. Consequently, the internal and external gears 35, 34 should be made of metal to obtain a rugged structure. It would not be desirable or practical to construct the gears 35, 34 of synthetic resin or nonferrous metal for reduced weight.

In the modified gear speed reducer, however, the gears 134, 135 are held in mesh with each other through the double-toothed belt 127. The gears 134, 135 are held in contact with each other through a plurality of points or regions because the double-toothed belt 127 is elastically deformed between the gears 134, 135. An increased number of teeth of these gears 134, 135 are available for transmitting the torque, and they contact each other through an increased area for distributing applied stresses or loads. Even though the gears 134, 135 are made of synthetic resin, fiber-reinforced synthetic resin, nonferrous metal, or the like, therefore, the intermeshing teeth of the gears 134, 135 are not subject to creep or backlash, particularly when the motor vehicle is accelerated or decelerated while the seatback 24 is being locked. Since the the gears 134, 135 are made of synthetic resin, fiber-reinforced synthetic resin, nonferrous metal, or the like, the double-toothed belt 127 undergoes less fatigue.

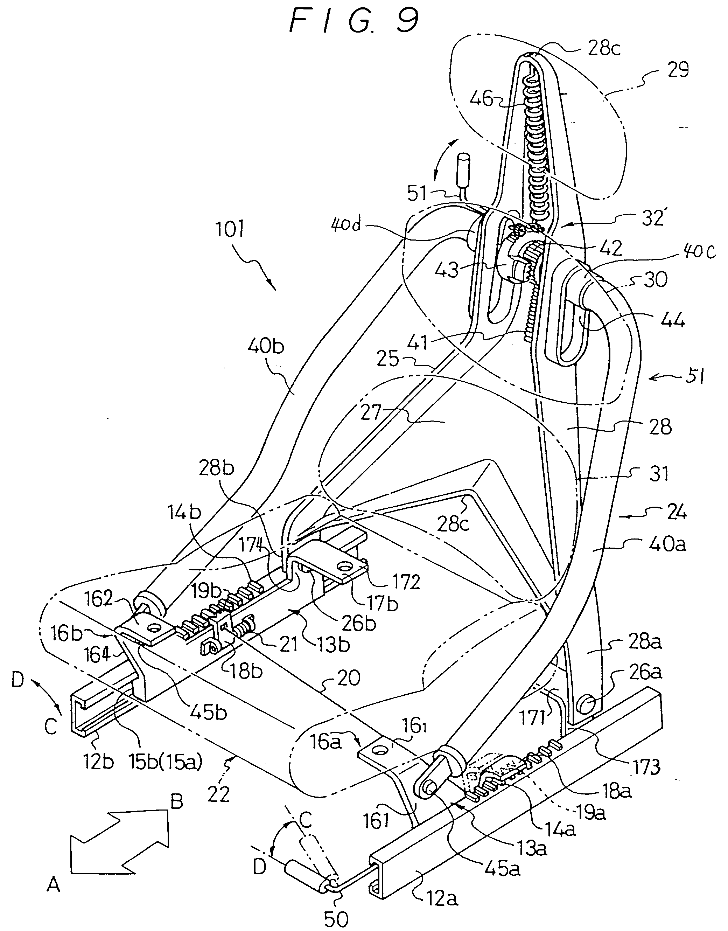

FIG. 9 shows a reclining seat according to a second embodiment of the present invention. Those parts shown in FIG. 9 which are identical to those of the reclining seat according to the first embodiment are denoted by identical reference characters, and will not be described in detail below.

The reclining seat, generally designated by 101 in FIG. 9, differs from the reclining seat according to the first embodiment with respect to an adjusting mechanism.

An adjusting mechanism 32' for adjusting the tilted position of the seatback 24 is positioned in the vicinity of the center of gravity of the body of the user seated on the seat. The adjusting mechanism 32' comprises a rack 41 fixed to the inner surface of the main panel 27 of the seatback frame 25, a pinion gear 42 rotatably held in mesh with the rack 41, and a lock mechanism 43 for locking the pinion gear 42 against rotation when required. The reclining arms 40a, 40b have respective upper ends 40c, 40d movably fitted in vertical slots 44 defined in the peripheral side wall 28 of the seatback frame 25. The ends 40c, 40d are joined to each other, with the pinion gear 42 rotatably mounted on the joint of these ends 40c, 40d. The other lower ends of the reclining arms 40a, 40b are pivotally coupled by respective pivot shafts 45a, 45b to vertical walls 163, 164, respectively, of the front brackets 16a, 16b. The upper end 28c of the peripheral side wall 28 of the seatback frame 25 is connected to the lock mechanism 43 by a return spring 46 for normally urging the seatback 24 forwardly.

When the pinion gear 42 is unlocked from the lock mechanism 43 by a handle 51, the upper ends 40c, 40d of the reclining arms 40a, 40b are displaced upwardly under the bias of the return spring 46, tilting the seatback 24 about the pivots 26a, 26b. The seatback 24 can now be tilted through a desired angle. After the tilted angle of the seatback 24 has been adjusted, the pinion gear 42 is locked against rotation by the lock mechanism 43 to lock the seatback 24 in the tilted position.

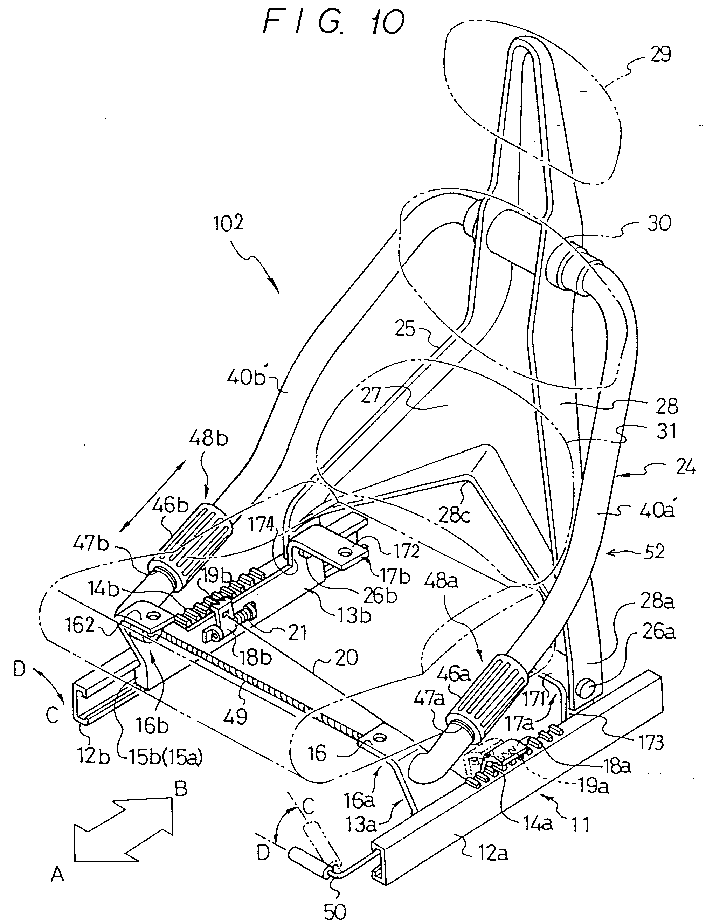

A reclining seat according to a third embodiment of the present invention will be described below with reference to FIG. 10. Those parts shown in FIG. 10 which are identical to those of the reclining seat according to the first embodiment are denoted by identical reference characters, and will not be described in detail below.

The reclining seat, generally designated by 102 in FIG. 9, differs from the reclining seat according to the first embodiment in that the seatback 24 is angularly adjusted when reclining arms 40a', 40b' are extended or contracted by extension/contraction adjusting mechanisms. The reclining arms 40a', 40b' are divided into arm segments at positions closer to the front ends than intermediate portions thereof, and the arm segments are connected by tubular couplings 46a, 46b. The tubular couplings 46a, 46b are internally threaded in opposite directions in their ends, and these internally threaded ends are threaded over external threaded ends 47a, 47b of the arm segments of the reclining arms 40a', 40b'. The tubular couplings 46a, 46b are connected to each other for synchronized rotation by a synchronizing flexible wire 49 or bevel gears (not shown). When the tubular couplings 46a, 46b are rotated, the arm segments threadedly coupled thereby are moved relatively to each other to extend or contract the reclining arms 40a', 40b'.

The tubular couplings 46a, 46b, the internally threaded ends thereof, and the externally threaded ends 47a, 47b of the arm segments of the reclining arms 40a', 40b' jointly constitute extension/contraction adjusting mechanisms 48a, 48b. When the reclining arms 40a', 40b' are contracted by rotating the tubular couplings 46a, 46b in one direction, the seatback 24 is tilted forwardly about the pivots 26a, 26b. When the reclining arms 40a', 40b' are extended by rotating the tubular couplings 46a, 46b in the other direction, the seatback 24 is tilted rearwardly about the pivots 26a, 26b.

The extension/contraction adjusting mechanisms 48a, 48b may comprise ball screws for easier adjusting operation.

The reclining seats according to the present invention offer the following advantages:

The truss structure composed of the reclining arms, the seat frame, and the seatback frame is effective to distribute a moment, which is applied when the user is seated on the seat, to the frames. Accordingly, the frames may be made of synthetic resin, light alloy, or the like for reduced weight. In the first and third embodiments, it is not necessary to provide a lock mechanism for locking the seatback in a desired tilted position, so that the reclining mechanism is relatively simple in structure. Furthermore, the seatback may be angularly adjusted continuously.

According to the modification shown in FIGS. 6, 7, and 8a through 8c, the gears of the gear speed reducer are held in mesh with each other through the elastomeric intermediate transmission member. The gears are thus held in mesh with each other through an increased area of contact, which distributes applied stresses or load.

Therefore, the gears may be made of synthetic resin, fiberreinforced synthetic resin, or other nonferrous metal, but are free of creep and backlash. The gears may be machined and finished with relatively large tolerances because the torque is transmitted therebetween through the intermediate transmission member as it is elastically deformed.

Although there have been described what are at present considered to be the preferred embodiments of the invention, it will be understood that the invention may be embodied in other specific forms without departing from the essential characteristics thereof. The present embodiments are therefore to be considered in all respects as illustrative, and not restrictive.

**Claims**

1. A reclining seat comprising:
a seat for supporting a lower part of the body of a user;
a seat frame supporting said seat;
a seatback for supporting an upper part of the body of the user;
a seatback frame supporting said seatback;
joint means for angularly movably joining said seatback frame to said seat frame;
reclining means for adjusting the angle at which said seatback is tilted with respect to said seat; and
said reclining means comprising a reclining arm having one end pivotally coupled to said seat frame and an opposite end pivotally coupled to said seatback frame, and an adjusting mechanism connected to said reclining arm, for positionally varying at least one end of said ends of the reclining arm.

2. A reclining seat according to claim 1, wherein said one end of the reclining arm is pivotally coupled to said seat frame at a position in the vicinity of the center of gravity of the thighs of the user seated on the seat, and said opposite end of the reclining arm is pivotally coupled to said seatback frame at a position in the vicinity of the center of gravity of the body of the user seated on the seat.

3. A reclining seat according to claim 1 or 2, wherein said adjusting mechanism is disposed in a position where said one end of the reclining arm is pivotally coupled to said seat frame.

4. A reclining seat according to claim 1 or 2, wherein said adjusting mechanism is disposed in a position where said opposite end of the reclining arm is pivotally coupled to said seatback frame.

5. A reclining seat according to any one of claims 1, 2, and 3, wherein said adjusting mechanism comprises a gear speed reducer which includes a swing member pivotally coupled to said one end of the reclining arm, a first gear disposed on said swing member for angular movement therewith, a second gear disposed eccentrically with respect to said first gear and held in mesh with the first gear, and a shaft having an eccentric cam rotatably fitted in a central hole defined in said first gear, the arrangement being such that when said shaft is rotated about its own axis, said first gear rotates at a reduced speed in mesh with said second

7

gear, causing said reclining arm to tilt said seat back into a tilted position, and when forces are applied from said reclining arm, said first gear is prevented from rotation, locking said seat back in the tilted position.

6. A reclining seat according to claim 5, wherein said first and second gears comprise external and internal gears, respectively, said gear speed reducer further including an elastically deformable intermediate transmission member disposed in mesh between said external and internal gears.

7. A reclining seat according to claim 6, wherein said intermediate transmission member has internal teeth held in mesh with said external gear and external teeth held in mesh with said internal gear.

8. A reclining seat according to claim 7, wherein said intermediate transmission member further includes stiffeners embedded between said internal and external teeth.

9. A reclining seat according to claim 7, wherein said internal teeth are held in mesh with all teeth of said external gear.

10. A reclining seat according to claim 1, wherein said adjusting mechanism comprises a rack fixed to said seatback frame, a pinion gear rotatably mounted on said opposite end of said reclining arm and held in mesh with said rack, and a lock mechanism for locking said pinion gear against rotation.

11. A reclining seat comprising:
 a seat for supporting a lower part of the body of a user;
 a seat frame supporting said seat;
 a seatback for supporting an upper part of the body of the user;
 a seatback frame supporting said seatback;
 joint means for angularly movably joining said seatback frame to said seat frame; and
 reclining means for adjusting the angle at which said seatback is tilted with respect to said seat; and
 said reclining means comprising a reclining arm having one end pivotally coupled to said seat frame and an opposite end pivotally coupled to said seatback frame, and an expansion/contraction adjusting mechanism connected to said reclining arm, for selectively extending and contracting said reclining arm.

# FIG. 1

F I G. 2

FIG. 3

FIG. 4

# FIG. 5a

# FIG. 5b

# FIG. 5c

EP 0 466 443 A1

# FIG. 6

EP 0 466 443 A1

# F I G. 7

FIG. 8a          FIG. 8b          FIG. 8c

EP 0 466 443 A1

# F I G. 9

# F I G. 10

# F I G. 11
## (PRIOR ART)

# F I G. 12
## (PRIOR ART)

EP 0 466 443 A1

## European Patent Office

# EUROPEAN SEARCH REPORT

Application Number

EP    91 30 6194

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4 887 866 (RUSIN) <br> * the whole document * | 1 | B60N2/22 |
| A | | 1,11 | |
| A | FR-A-2 398 635 (KEIPER) <br> * page 7, line 28 – page 8, line 9; figures 1-6 * | 1,5,6,8 | |
| A | US-A-3 610 651 (JACKSON) | | |
| A | GB-A-193 497 (PRENTICE) | | |
| A | US-A-1 773 597 (MYERSON) | | |
| A | FR-A-2 560 832 (PEUGEOT) | | |
| A | DE-A-2 556 271 (FICKELSCHER) | | |
| A | EP-A-0 046 882 (KEIPER) | | |
| | ----- | | **TECHNICAL FIELDS SEARCHED (Int. Cl.5 )** <br><br> B60N <br> A47C |

The present search report has been drawn up for all claims

| Place of search | Date of completion of the search | Examiner |
|---|---|---|
| THE HAGUE | 07 NOVEMBER 1991 | HORVATH R. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P0401)

19